# EUROPÄISCHE PATENTANMELDUNG

(11) **EP 2 980 422 A1**
(43) Veröffentlichungstag der Anmeldung: **03.02.2016**
(21) Anmeldenummer: 14178958.6
(22) Anmeldetag: 29.07.2014
(51) Int. Cl.: F16B 5/06, F16B 19/00, F16B 21/08

(54) **Verbindungselement**

(71) Anmelder: Siemens Aktiengesellschaft, 80333 München (DE)
(72) Erfinder: Pippert, Erhard, 14624 Dallgow-Döberritz OT Seeburg (DE); Schleich, Frank, 16727 Velten (DE)

(57) **Zusammenfassung**

Die Erfindung betrifft ein Verbindungselement (1) zur lösbaren Verbindung wenigstens zweier, längs einer Verbindungsachse (40) fluchtende Bohrungen (11, 21) aufweisender Bauteile (10, 20), mit
- einem in die Bohrungen (11, 21) einführbaren Schaft (2),
- einer mit dem Schaft (2) verbundenen Stützplatte (3) zur in Richtung der Verbindungsachse (40) abstützenden Anlage an einem der Bauteile (10), und
- zumindest drei mit dem Schaft (2) verbundenen und von diesem radial abstehenden Halteflügeln (4), die sich jeweils längs des Schafts (2) erstrecken und derart elastisch verformbar sind, dass sie beim Durchführen durch die Bohrungen (11 21) zum Schaft (2) hin biegbar und danach wenigstens teilweise selbsttätig radial aufstellbar sind, so dass bei anliegender Stützplatte (3) ein aus der Bohrung des anderen Bauteils herausstehendes Teil der Halteflügel (4) radial weiter vom Schaft (2) absteht als ein Rand (12, 22) der Bohrung (11, 21).

## Beschreibung

Verbindungselemente im Sinne der Erfindung dienen zur lösbaren Verbindung wenigstens zweier, längs einer Verbindungsachse fluchtende Bohrungen aufweisender Bauteile. Insbesondere sind solche Verbindungen gemeint, die keine großen Haltekräfte erfordern, sondern bei denen es ausreicht, die Bauteile locker miteinander zu verbinden.

Bekannt ist, solche Verbindungen mittels einer Schraube, die durch die Bohrungen geführt wird und einer Mutter, die auf das freie Ende der Schraube aufgeschraubt wird, herzustellen.

Außerdem sind verschiedene Arten von Clipsverbindungen bekannt, beispielsweise aus der US 2007/0116537 A1 oder der US 4,920,618. Aus der EP 2 302 227 A1 ist eine Verbindung mit einem zweiteiligen, ineinander steckbaren Verbindungselement bekannt.

Nachteilig am bekannten Stand der Technik ist, dass diese Verbindungselemente entweder nicht oder nur schwer demontierbar sind, oder für die Werkzeug benötigt werden.

Aufgabe der Erfindung ist es, ein Verbindungselement anzugeben, das eine lösbare Verbindung erlaubt, und das werkzeuglos montierbar und demontierbar ist.

Erfindungsgemäß ist dazu ein Verbindungselement zur lösbaren Verbindung wenigstens zweier, längs einer Verbindungsachse fluchtende Bohrungen aufweisender Bauteile vorgesehen. Das erfindungsgemäße Verbindungselement weist einen in die Bohrung einführbaren Schaft, eine mit dem Schaft verbundene Stützplatte zur in Richtung der Verbindungsachse abstützenden Anlage an einem der Bauteile, und zumindest drei mit dem Schaft verbundene und von diesem radial abstehende Halteflügel, die sich jeweils längs des Schafts erstrecken auf. Die Halteflügel sind flächige Gebilde. Eine Seite dieses Gebildes verläuft längs des Schaftes und bildet eine Verbindungslinie mit diesem. Die Halteflügel sind radial um den Schaft herum verteilt angeordnet.

Die Halteflüge sind derart elastisch verformbar, dass sie beim Durchführen durch die Bohrungen zum Schaft hin biegbar und danach wenigstens teilweise selbsttätig radial aufstellbar sind, so dass bei anliegender Stützplatte ein aus der Bohrung des anderen Bauteils heraus stehendes Teil der Halteflügel radial weiter vom Schaft absteht als ein Rand der Bohrung. Die der Stützplatte abgewandte Außenkante der Bohrung schneidet so in die Halteflügel ein, dass die beiden Bauteile zusammengehalten werden. Als Material für das Verbindungselement ist ein elastisch verformbarer Kunststoff geeignet, insbesondere Polyethylen.

Beim Einführen des Verbindungselements in die Bohrung werden die Halteflügel entweder mit den Fingern in Richtung Schaft umgebogen, oder sie sind in ihrer Form so gestaltet, dass der Bohrungsrand die Halteflügel umbiegt. Gegebenenfalls kann dies durch eine leichte Drehung des Verbindungselements um den Schaft unterstützt werden. Der Teil der Halteflügel, der am gegenüberliegenden Ende der Bohrung aus dieser heraus ragt, stellt sich selbsttätig wieder auf und verkantet den Halteflügel mit dem Bohrungsrand und hält so die beiden Bauteile zwischen dem Halteflügel und der Stützplatte zusammen.

Durch Ziehen an der Stützplatte lässt sich das Verbindungselement wieder aus der Bohrung entfernen, und die Verbindung der beiden Bauteile wird gelöst. Dabei werden die Halteflügel in ähnlicher Weise wie beim Einführen umgebogen. Auch hier kann dies durch Drehen des Verbindungselementes unterstützt werden.

Ein solches Verbindungselement ist kostengünstig herstellbar und leicht ohne Werkzeug montierbar und demontierbar.

In einer bevorzugten Ausgestaltung der Erfindung ist wenigstens einer der Halteflügel dreiecks- oder trapezförmig ausgebildet und entlang seiner längsten Seite mit dem Schaft verbunden. Vorzugsweise sind alle Halteflügel derart ausgestaltet.

Durch die Dreiecks- oder Trapezform passt sich das Verbindungselement leicht an unterschiedliche Bohrungsdurchmesser und -längen an.

Vorteilhaft bildet eine der Stützplatte zugewandte Seite des Halteflügels mit der längsten Seite einen ersten Winkel α von 15° bis 50°. Ein derartiger Winkel α bietet bei den gängigen Verhältnissen von Bohrungslänge zu Bohrungsdurchmesser von etwa 2 eine gute Haltekraft und ist gegen leichte Schwankungen dieses Verhältnisses unempfindlich.

Ferner wird bevorzugt, dass eine der Stützplatte abgewandte Seite des Halteflügels mit der längsten Seite einen zweiten Winkel β von 25° bis 70° bildet. Ein solcher Winkel β gewährleistet eine leichte Einführung des Verbindungselementes in die Bohrung und unterstützt das Umbiegen der Halteflügel durch die Bohrungskante.

Insbesondere wird bevorzugt, dass der Winkel α kleiner als der Winkel β ist.

In einer vorteilhaften Ausgestaltung der Erfindung verläuft die längste Seite parallel zur Verbindungsachse. Der Halteflügel bildet so eine ebene, zur Verbindungsachse senkrechte Fläche. Ein derartiges Verbindungselement ist besonders leicht herstellbar.

In einer weiteren vorteilhaften Ausgestaltung der Erfindung verläuft die längste Seite schraubenlinienförmig um den Schaft. Vorzugsweise beschreibt die längste Seite einen Winkel von weniger als 360° um den Schaft, besonders vorteilhaft sind Winkel von 90° bis 150°. Durch den schraubenartig um den Schaft gewundenen Halteflügel wird das Einführen in die Bohrung erleichtert, indem das Verbiegen der Halteflügel in die gleiche Richtung durch die um den Schaft gebogene Form unterstützt wird. Bei zu großen Winkeln, insbesondere bei Winkeln größer als 360° werden die Halteflügel jedoch zu steif, so dass sie sich nur noch schwer verbiegen lassen. Deswegen werden Winkel von weniger als 360° bevorzugt.

Des Weiteren sieht eine vorteilhafte Ausgestaltung der Erfindung vor, dass die Stützplatte auf der zum Schaft zeigenden Seite eine Fase aufweist. Durch eine solche Fase lässt sich die Stützplatte leicht greifen und das Verbindungselement aus der Bohrung herausziehen.

Im Folgenden wird die Erfindung anhand der Zeichnungen näher erläutert. Dabei zeigen:
- Figur 1: 3D Darstellung eines erfindungsgemäßen Verbindungselementes,
- Figur 2: eine Schnittdarstellung zweier mittels eines erfindungsgemäßen Verbindungselementes verbundener Bauteile,
- Figur 3: eine alternative Ausführungsform eines erfindungsgemäßen Verbindungselementes,
- Figur 4a-d: schematische Darstellungen verschiedener Formen eines Halteflügels.

Einander entsprechende Teile sind in allen Figuren mit den gleichen Bezugszeichen versehen.

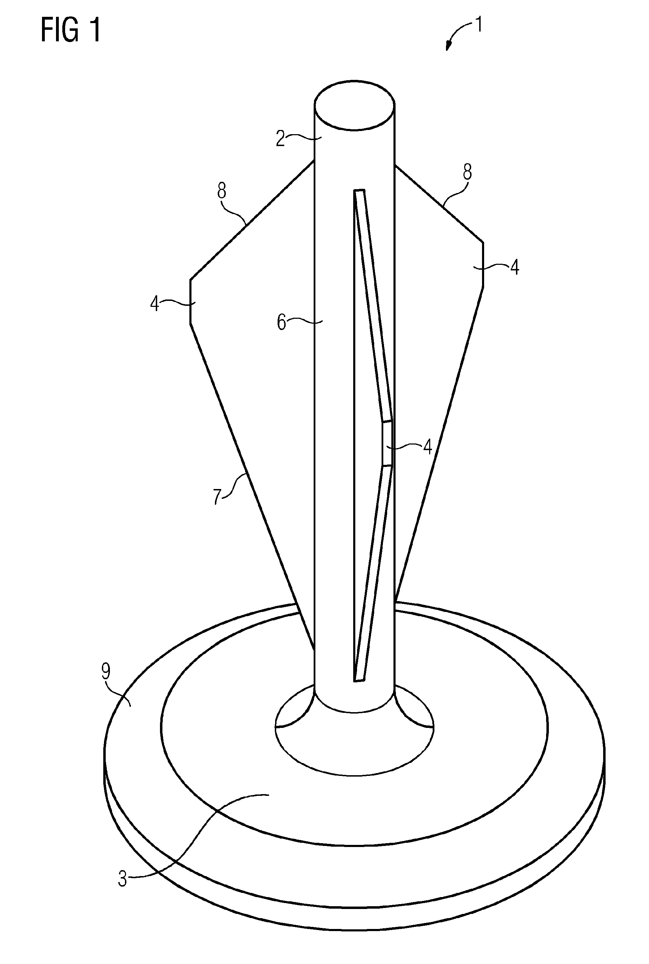

Figur 1 zeigt ein erfindungsgemäßes Verbindungselement 1 in einer 3D Darstellung. Von einer Stützplatte 3 erstreckt sich ein Schaft 2. Die Stützplatte 3 ist hier kreisrund dargestellt, kann aber auch vier- oder mehreckig sein. Der Schaft 2 erstreckt sich mittig von der Stützplatte 3 senkrecht zu dieser. Ein Ende des Schaftes 2 ist mit der Stützplatte 3 verbunden, der Schaft 2 kann sich jedoch auch durch die Stützplatte 3 hindurch erstrecken und so als Griff zum Entfernen des Verbindungselementes 1 dienen.

Vom Schaft 2 stehen radial drei Halteflügel 4 ab, die radial um den Schaft herum verteilt angeordnet sind. Eine Ausführung mit drei Halteflügeln 4 hat gegenüber einer mit zwei Halteflügeln 4 den Vorteil der besseren Selbstzentrierung. Ausführungen mit vier und mehr Halteflügeln 4 können bei bestimmten Anwendungsfällen vorteilhaft sein, so kann eine Ausführung mit mehr Halteflügeln 4 eine größere Haltekraft aufbringen, lässt sich jedoch schwerer einführen. Die Halteflügel 4 sind im Wesentlichen dreiecks- oder trapezförmig und weisen eine längste Seite 6 auf, entlang derer die Halteflügel 4 mit dem Schaft 2 verbunden sind.

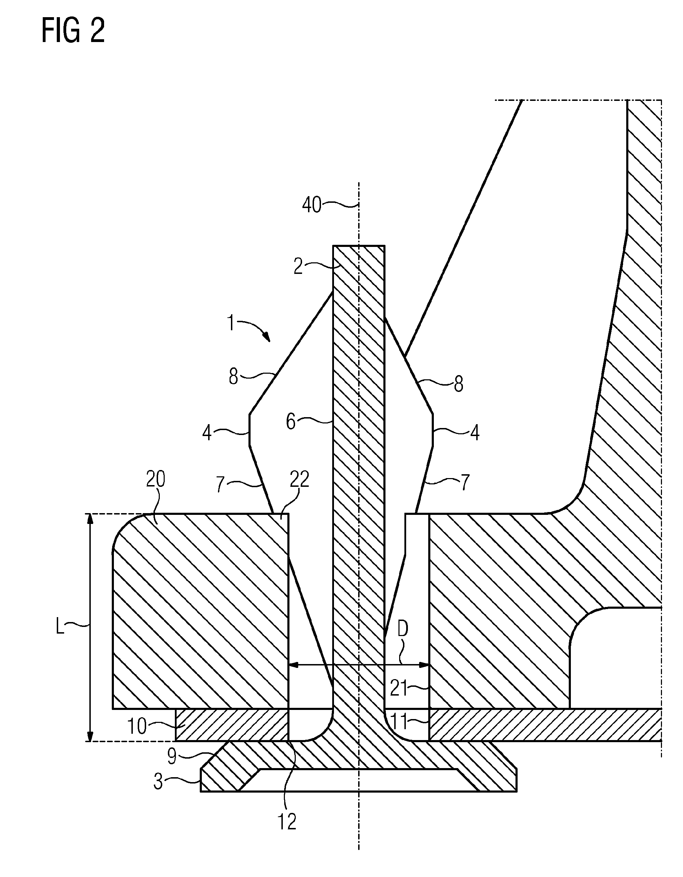

Die Figur 2 zeigt zwei Bauteile 10, 20, die mit einem erfindungsgemäßen Verbindungselement verbunden sind. Das eine Bauteil 20 ist dabei ein runder oder rechteckiger Flansch mit mehreren Bohrungen 21, von denen hier nur eine gezeigt ist. Das andere Bauteil 10 ein Deckel, der den Flansch verschließt und der ebenfalls eine Bohrung 11 aufweist. Die Bauteile 10, 20 sind so angeordnet, dass ihre Bohrungen 11, 21 fluchten. Das Verbindungselement 1 wird nun mit dem freien Ende des Schaftes 2 zuerst von der Seite des Bauteils 10 in die fluchtenden Bohrungen 11, 21 gesteckt. Die Ausrichtung der Bohrungen 11, 21 definiert die Verbindungsachse 40. Der Schaft 2 erstreckt sich längs der Verbindungsachse 40, die längste Seite 6 der Halteflügel 4 verläuft parallel zu der Verbindungsachse 40.

Die Halteflügel 4 sind so dimensioniert, dass ihr Außendurchmesser größer ist, als der der Bohrungen 11, 21. Sobald die Halteflügel 4 mit dem Rand 12 der Bohrung 11 in Kontakt kommen, werden sie zum Schaft hin umgebogen. Dazu müssen die Halteflügel 4 aus einem elastisch verformbaren Material wie beispielsweise Polyethylen, Silikon, natürlichem oder synthetischem Gummi hergestellt sein. Die entgegen der Verbindungsachse 40 in einem spitzen Winkel α geneigte Seite 8 der Halteflügel 4 unterstützt das Umbiegen. Gegebenenfalls kann der Benutzer durch leichtes Drehen des Verbindungselementes 1 das Umbiegen der Halteflügel 4 zusätzlich unterstützen. Ist das Verbindungselement so weit in die Bohrungen 11, 21 hineingeschoben, dass der breiteste Teil der Halteflügel 4, also derjenige, der radial am weitesten vom Schaft 2 entfernt ist, auf der anderen Seite des Bauteils 20 aus der Bohrung 21 heraussteht, stellt sich der Halteflügel 4 selbsttätig zumindest teilweise wieder auf. Liegt schließlich die Stützplatte 3 am Bauteil 10 an, so stehen die Halteflügel 4 außerhalb der Bohrung 21 radial weiter vom Schaft 2 ab, als der Rand 12, 22 der Bohrungen 11, 21 und verhindert so ein Herausfallen des Verbindungselementes 1. Die Bauteile 10, 20 sind somit miteinander verbunden. Die Winkel α und β der Halteflügel 4 sind vorzugsweise so dimensioniert, dass beim Anliegen der Stützplatte 3 an das Bauteil 10 die der Stützplatte 3 gegenüberliegende Seite 8 der Halteflügel 4 vollständig aus der Bohrung 21 herausragt, und die der Stützplatte zugewandte Seite 7 der Halteflügel 4 nur teilweise aus der Bohrung herausragt. Sofern der Lochdurchmesser der Bohrungen 11, 21 kleiner ist, als die Summe L der Längen der Bohrungen 11, 21 wird dies dadurch erreicht, dass der Winkel α kleiner ist, als der Winkel β. Bei anderen Verhältnissen von Lochdurchmesser D zu Länge L kann dies auch umgekehrt sein.

Soll die Verbindung der Bauteile 10, 20 wieder gelöst werden, so kann das Verbindungselement 1 entgegen der Einsteckrichtung wieder aus den Bohrungen 11, 21 herausgezogen werden. Dazu wird einfach an der Stützplatte 3 gezogen. Eine Fase 9 an der dem Bauteil 10 und somit auch dem Schaft 2 zugewandten Seite der Stützplatte erleichtert dies. Gegebenenfalls kann wieder eine leichte Drehung des Verbindungselementes das Herausziehen erleichtern. Die Halteflügel 4 werden dabei wieder zum Schaft hin umgebogen. Der spitze Winkel α zwischen der am Rand 22 der Bohrung 21 anliegenden Seite 7 der Halteflügel 4 und der am Schaft 2 anliegenden längsten Seite 6 erleichtert dies.

Die genauen Dimensionen eines Verbindungselementes 1 hängen vom Lochdurchmesser D und Länge L ab. Dabei ist das Verbindungselement 1 aber unempfindlich gegen Toleranzen bei L und D. Mit wenigen unterschiedlich dimensionierten Verbindungselementen lassen sich so große Bereiche von L und D abdecken.

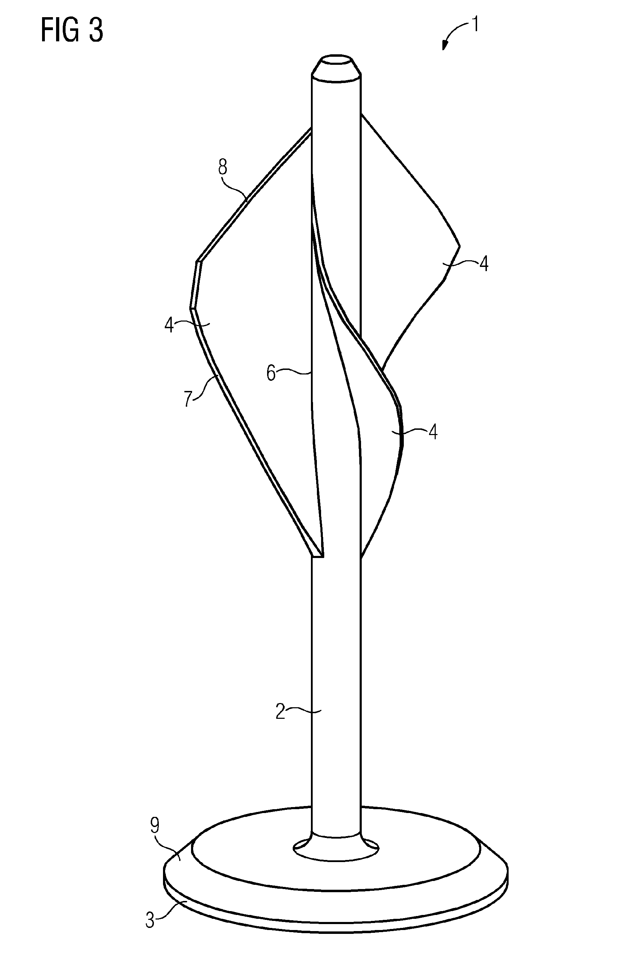

Die Figur 3 zeigt eine alternative Ausführung des Verbindungselementes 1. Hier setzen die Halteflügel 4 weiter von der Stützplatte 3 entfernt am Schaft an, als im Beispiel der Figuren 1 und 2. Hierdurch kann das Verbindungselement bei größeren Längen L eingesetzt werden.

Außerdem sind die Halteflügel 4 nicht eben ausgeführt wie in den Figuren 1 und 2, sondern gedreht. Die Verbindungsline eines Halteflügels 4 mit dem Schaft 2 beschreibt dabei eine Schraubenlinie um den Schaft 2. Im gezeigten Ausführungsbeispiel beschreibt die Schraubenlinie einen Winkel von 120° um den Schaft 2.

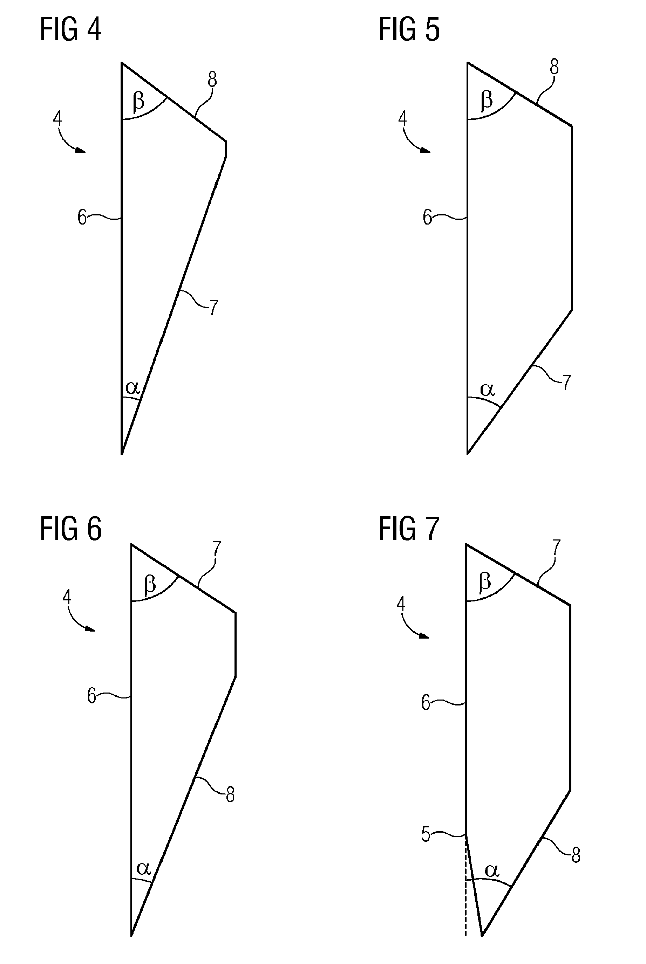

Die Figuren 4a bis 4d zeigen schematisch verschiedene Formen der Halteflügel 4 im Schnitt. Beim Ausführungsbeispiel nach Figur 4d weist die längste Seite 6 einen Knick 5 auf, so dass ein der Stützplatte 3 zugewandter Bereich des Halteflügels 4 vom Schaft 2 absteht.

Die Erfindung beschränkt sich allerdings nicht auf diese. Insbesondere können die Seiten 7 und 8 der Halteflügel 4 auch gekrümmt und/oder die Ecken abgerundet sein. Auch müssen nicht alle Halteflügel 4 eines Verbindungselementes 1 gleich groß sein, oder die gleiche Form aufweisen. So wäre ein Verbindungselement 1 denkbar, dass eine gerade Anzahl von Halteflügeln 4 aufweist, beispielsweise sechs, von denen eine Hälfte die Kontur nach Figur 4a aufweist, und die andere die Kontur nach Figur 4b. Dies hätte den Vorteil, dass nicht alle Halteflügel zugleich in Kontakt mit dem Rand 12 der Bohrung 11 kommen.

## Patentansprüche

1. Verbindungselement (1) zur lösbaren Verbindung wenigstens zweier, längs einer Verbindungsachse (40) fluchtende Bohrungen (11, 21) aufweisender Bauteile (10, 20), mit
- einem in die Bohrungen (11, 21) einführbaren Schaft (2),
- einer mit dem Schaft (2) verbundenen Stützplatte (3) zur in Richtung der Verbindungsachse (40) abstützenden Anlage an einem der Bauteile (10), und
- zumindest drei mit dem Schaft (2) verbundenen und von diesem radial abstehenden Halteflügeln (4), die sich jeweils längs des Schafts (2) erstrecken und derart elastisch verformbar sind, dass sie beim Durchführen durch die Bohrungen (11, 21) zum Schaft (2) hin biegbar und danach wenigstens teilweise selbsttätig radial aufstellbar sind, so dass bei anliegender Stützplatte (3) ein aus der Bohrung des anderen Bauteils herausstehendes Teil der Halteflügel (4) radial weiter vom Schaft (2) absteht als ein Rand (12, 22) der Bohrung (11, 21).

2. Verbindungselement (1) nach Anspruch 1,
**dadurch gekennzeichnet, dass**
wenigstens einer der Halteflügel (4) dreiecks- oder trapezförmig ausgebildet und entlang seiner längsten Seite (6) mit dem Schaft (2) verbunden ist.

3. Verbindungselement (1) nach einem der Ansprüche 1 oder 2,
**dadurch gekennzeichnet, dass**,
eine der Stützplatte (3) zugewandte Seite (7) des Halteflügels (4) mit der längsten Seite (6) einen ersten Winkel α von 15° bis 50° bildet.

4. Verbindungselement (1) nach einem der Ansprüche 1 bis 3,
**dadurch gekennzeichnet, dass**,
eine der Stützplatte (3) abgewandte Seite (8) des Halteflügels (4) mit der längsten Seite (6) einen zweiten Winkel β von 25° bis 70° bildet.

5. Verbindungselement (1) nach einem der Ansprüche 1 bis 4,
**dadurch gekennzeichnet, dass**
die längste Seite (6) parallel zur Verbindungsachse (40) verläuft.

6. Verbindungselement (1) nach einem der Ansprüche 1 bis 4,
**dadurch gekennzeichnet, dass**
die längste Seite (6) schraubenlinienförmig um den Schaft (2) verläuft.

7. Verbindungselement (1) nach einem der Ansprüche 1 bis 5,
**dadurch gekennzeichnet, dass**,
die Stützplatte (3) auf der zum Schaft (2) zeigenden Seite eine Fase (9) aufweist.
